(19) Europäisches Patentamt / European Patent Office / Office européen des brevets

(11) **EP 4 693 939 A1**

(12) **EUROPEAN PATENT APPLICATION**
published in accordance with Art. 153(4) EPC

(43) Date of publication:
**11.02.2026 Bulletin 2026/07**

(21) Application number: **24795952.1**

(22) Date of filing: **18.04.2024**

(51) International Patent Classification (IPC):
**H04B 7/06** (2006.01)

(52) Cooperative Patent Classification (CPC):
**H04B 7/0456; H04B 7/06; H04L 25/02**

(86) International application number:
**PCT/CN2024/088699**

(87) International publication number:
**WO 2024/222571 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 CN 202310481480**

(71) Applicant: **Huawei Technologies Co., Ltd.**
**Shenzhen, Guangdong 518129 (CN)**

(72) Inventors:
- **CHEN, Shujing**
  **Shenzhen, Guangdong 518129 (CN)**
- **QIN, Qibo**
  **Shenzhen, Guangdong 518129 (CN)**
- **LING, Cen**
  **Shenzhen, Guangdong 518129 (CN)**
- **WANG, Chao**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) Embodiments of this application provide a communication method and apparatus. In the method, a network device receives first information from a terminal device, where the first information includes information about a first location and a movement speed of the terminal device, and the first location is a location of the terminal device. The network device predicts, based on the first information, a second location at which the terminal device performs channel estimation, and determines a first channel covariance matrix, where the first channel covariance matrix is a channel covariance matrix of a downlink channel corresponding to the second location, and the first channel covariance matrix is for determining downlink channel state information. The network device sends the first channel covariance matrix to the terminal device. In embodiments of this application, the first channel covariance matrix used by the terminal device to perform channel estimation can reflect a current channel state of the terminal device, to improve accuracy of channel estimation, so as to improve accuracy of the obtained CSI.

FIG. 5

**Description**

CROSS-REFERENCE TO RELATED APPLICATIONS

This application claims priority to Chinese Patent Application No. 202310481480.7, filed with the China National Intellectual Property Administration on April 27, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

With development of communication technologies, there are higher requirements on a system capacity, spectrum efficiency, and the like of a communication system. In the communication system, a massive (massive) multiple-input multiple-output (multiple-input multiple-output, MIMO) technology plays a crucial role in improving the spectral efficiency of the system. When sending downlink data to a terminal device by using the MIMO technology, a network device may precode a to-be-sent signal. Currently, the network device may precode the signal based on channel state information (channel state information, CSI) from the terminal device.

The terminal device may perform channel estimation by using a downlink channel covariance matrix, to obtain the CSI. Generally, the terminal device performs filtering on a historically obtained downlink channel covariance matrix to obtain the downlink channel covariance matrix. For example, a downlink channel covariance matrix obtained by the terminal device at a moment t1 for channel estimation is obtained by performing filtering on a downlink channel covariance matrix obtained before the moment t1. However, a location at which the terminal device performs channel estimation may change greatly relative to a location corresponding to the historical downlink channel covariance matrix. Therefore, a channel environment in which the terminal device performs channel estimation may also change greatly relative to a channel environment corresponding to the historical downlink channel covariance matrix. Consequently, the downlink channel covariance matrix obtained by performing filtering on the historical downlink channel covariance matrix cannot accurately reflect a current channel state of the terminal device, resulting in low accuracy of the CSI obtained by the terminal device.

SUMMARY

This application provides a communication method and apparatus, to improve accuracy of obtained CSI.

According to a first aspect, an embodiment of this application provides a communication method. The method may be applied to a network device in a communication system. The method includes: receiving first information from a terminal device, where the first information includes information about a first location and a movement speed of the terminal device, and the first location is a location of the terminal device; predicting, based on the first information, a second location at which the terminal device performs channel estimation, and determining a first channel covariance matrix, where the first channel covariance matrix is a channel covariance matrix of a downlink channel corresponding to the second location, and the first channel covariance matrix is for determining downlink channel state information; and sending the first channel covariance matrix to the terminal device.

In this embodiment of this application, the first channel covariance matrix used by the terminal device to determine the downlink channel state information is determined by the network device based on information about the location at which the terminal device performs channel estimation. In other words, the first channel covariance matrix used by the terminal device to perform channel estimation can reflect a current channel state of the terminal device, to improve accuracy of channel estimation, so as to improve accuracy of the obtained CSI.

In a possible implementation, determining the first channel covariance matrix includes: determining the first channel covariance matrix based on environment information of the second location. The network device determines the first channel covariance matrix based on the environment information of the second location, so that the first channel covariance matrix can reflect a channel environment of the second location, to improve accuracy of the first channel covariance matrix.

In a possible implementation, sending the first channel covariance matrix to the terminal device includes: sending the first channel covariance matrix to the terminal device when a degree of variation of the first channel covariance matrix relative to a second channel covariance matrix satisfies a first condition, where the second channel covariance matrix is a channel covariance matrix obtained in a previous channel estimation periodicity; or receiving second information from the terminal device, and sending the first channel covariance matrix to the terminal device, where the second information indicates that there is a channel covariance matrix update requirement.

In the foregoing technical solution, when the network device determines that a difference between the channel covariance matrix used by the terminal device to perform channel estimation and the channel covariance matrix obtained in the previous channel estimation periodicity is large, it indicates that a channel environment changes greatly. In this case, sending the first channel covariance matrix to the terminal device can improve accuracy of channel estimation, reduce signaling interaction between the network device and the terminal device, and save resources. Alternatively, when receiving the second information from the terminal device, the network device sends the first channel covariance matrix to the terminal device, and this better satisfies a requirement of the terminal device.

In a possible implementation, sending the first channel covariance matrix to the terminal device when the degree of variation of the first channel covariance matrix relative to the second channel covariance matrix satisfies the first condition includes: sending third information to the terminal device when the degree of variation of the first channel covariance matrix relative to the second channel covariance matrix satisfies the first condition, where the third information is for requesting the terminal device to report whether there is a channel covariance matrix update requirement; receiving the second information from the terminal device, where the second information indicates that there is a channel covariance matrix update requirement; and sending the first channel covariance matrix to the terminal device.

In the foregoing technical solution, when a difference between the channel covariance matrix used by the terminal device to perform channel estimation and the channel covariance matrix obtained in the previous channel estimation periodicity is large, request information may be further sent to the terminal device, to query whether the terminal device needs to update a downlink channel covariance matrix. When the terminal device feeds back a requirement, it indicates that the terminal device determines that a current channel environment may change greatly. In this case, the first channel covariance matrix is then sent to the terminal device. In this way, the network device and the terminal device perform dual verification on a degree of variation of a channel covariance matrix to determine whether the first channel covariance matrix from the network device needs to be used, so that accuracy of the downlink channel covariance matrix for performing channel estimation can be improved, thereby improving accuracy of channel estimation.

In a possible implementation, before receiving the second information from the terminal device, the method further includes: sending third information to the terminal device, where the third information is for requesting the terminal device to report whether there is a channel covariance matrix update requirement.

In the foregoing technical solution, the first downlink channel covariance matrix sent by the network device to the terminal device satisfies a requirement of the terminal device.

In a possible implementation, the first channel covariance matrix includes a space domain covariance matrix, a frequency domain covariance matrix, and/or a joint space-frequency covariance matrix.

In the foregoing technical solution, that the channel covariance matrix includes the space domain covariance matrix, the frequency domain covariance matrix, and/or the joint space-frequency covariance matrix complies with a stipulation in an existing protocol.

In a possible implementation, the first channel covariance matrix includes the joint space-frequency covariance matrix, and the method further includes: receiving a first coefficient matrix from the terminal device, where the first coefficient matrix represents a projection coefficient of a downlink instantaneous channel on the joint space-frequency covariance matrix; reconstructing, based on the first coefficient matrix, a first matrix, and a second matrix, the downlink channel corresponding to the second location, where the first matrix is a matrix formed by an eigenvector of a space domain covariance matrix included in the joint space-frequency covariance matrix, the second matrix is a matrix formed by an eigenvector of a frequency domain covariance matrix included in the joint space-frequency covariance matrix, and the first matrix and the second matrix are determined based on the first channel covariance matrix.

In the foregoing technical solution, after the network device sends the joint space-frequency covariance matrix to the terminal device, when feeding back downlink CSI, the terminal device may only feed back a short-periodicity coefficient, that is, the first coefficient matrix, and does not need to feed back a long-periodicity coefficient, for example, a space domain base, a second coefficient matrix, a frequency domain base, and a third coefficient matrix. This helps reduce system transmission overheads for feeding back the downlink CSI by the terminal device.

In a possible implementation, sending the first channel covariance matrix to the terminal device includes: sending the first channel covariance matrix which is compressed to the terminal device, where a data amount of the first channel covariance matrix is greater than a first threshold.

In the foregoing technical solution, when the data amount of the first channel covariance matrix is greater than the first threshold, the network device compresses the first channel covariance matrix and then sends the first channel covariance matrix which is compressed to the terminal device, so that transmission overheads can be reduced.

According to a second aspect, an embodiment of this application provides a communication method. The method may be applied to a terminal device in a communication system. The method includes: sending first information to a network device, where the first information includes information about a first location and a movement speed of the terminal device, the first location is a location of the terminal device, and the first information is for predicting a second location at which the terminal device performs channel estimation; receiving a first channel covariance matrix from the network device, where the first channel covariance matrix is a channel covariance matrix of a downlink channel corresponding to the second location; and determining, based on the first channel covariance matrix, downlink channel state information corresponding to the second location.

In a possible implementation, sending the first information to the network device includes: periodically sending the first information to the network device; or sending the first information to the network device when the movement speed of the terminal device is greater than a second threshold.

In the foregoing technical solution, that the terminal device periodically reports location information complies with a specification in an existing protocol. In addition, the terminal device reports the location information only when detecting that the movement speed is fast (which is greater than a preset speed), so that signaling interaction between the terminal device and the network device can be reduced, and power consumption of the terminal device can be reduced.

In a possible implementation, the method further includes: sending second information to the network device, where the second information indicates that there is a channel covariance matrix update requirement.

In a possible implementation, before sending the second information to the network device, the method further includes: receiving third information from the network device, where the third information is for requesting the terminal device to report whether there is a channel covariance matrix update requirement.

In a possible implementation, the first channel covariance matrix includes a space domain covariance matrix, a frequency domain covariance matrix, and/or a joint space-frequency covariance matrix.

In a possible implementation, the first channel covariance matrix includes the joint space-frequency covariance matrix, and the method further includes: determining a first coefficient matrix based on the joint space-frequency covariance matrix, where the first coefficient matrix represents a projection coefficient of a downlink instantaneous channel on the joint space-frequency covariance matrix; and sending the first coefficient matrix to the network device, where the first coefficient matrix is for reconstructing the downlink channel corresponding to the second location.

In a possible implementation, receiving the first channel covariance matrix from the network device includes: receiving the first channel covariance matrix which is compressed from the network device; and decompressing the first channel covariance matrix which is compressed, to obtain the first channel covariance matrix.

According to a third aspect, an embodiment of this application provides a communication method. The method may be applied to a terminal device in a communication system. The method includes: receiving a first channel covariance matrix from a network device, where the first channel covariance matrix is a joint space-frequency covariance matrix; determining a first coefficient matrix based on the first channel covariance matrix, where the first coefficient matrix represents a projection coefficient of a downlink instantaneous channel on the joint space-frequency covariance matrix; and sending the first coefficient matrix to the network device, where the first coefficient matrix is for reconstructing the downlink channel corresponding to the second location.

In embodiments of this application, the first channel covariance matrix sent by the network device to the terminal device includes a long-periodicity coefficient (a space domain base, a frequency domain base, a second coefficient matrix for correcting a space domain base, and a third coefficient matrix for correcting a frequency domain base) for reconstructing a downlink channel. Therefore, when feeding back downlink CSI, the terminal device may only feed back a short-periodicity coefficient (the first coefficient matrix), and does not need to feed back the long-periodicity coefficient. This helps reduce system transmission overheads for feeding back the downlink CSI by the terminal device.

In a possible implementation, before receiving the first channel covariance matrix from the network device, the method further includes: sending first information to the network device, where the first information includes information about a first location and a movement speed of the terminal device, the first location is a location of the terminal device, and the first information is for predicting a second location at which the terminal device performs channel estimation and determining the first channel covariance matrix corresponding to the second location.

In a possible implementation, sending the first information to the network device includes: periodically sending the first information to the network device; or sending the first information to the network device when it is determined that the movement speed is greater than a preset speed.

In a possible implementation, the method further includes: determining, based on the first channel covariance matrix, downlink channel state information corresponding to the second location.

In a possible implementation, the method further includes: sending second information to the network device, where the second information indicates that there is a channel covariance matrix update requirement.

In a possible implementation, before sending the second information to the network device, the method further includes: receiving third information from the network device, where the third information is for requesting the terminal device to report whether there is a channel covariance matrix update requirement.

In a possible implementation, receiving the first channel covariance matrix from the network device includes: receiving the first channel covariance matrix which is compressed from the network device; and decompressing the first channel covariance matrix which is compressed, to obtain the first channel covariance matrix.

According to a fourth aspect, an embodiment of this application provides a communication apparatus. The apparatus may be a network device, or may be a module (for example, a chip) used in the network device. The apparatus has a function of implementing any implementation method in the first aspect. The function may be implemented by hardware, or may be implemented by hardware executing corresponding software. The hardware or software includes one or more modules corresponding to the functions.

According to a fifth aspect, an embodiment of this application provides a communication apparatus. The apparatus may be a terminal device, or may be a module (for example, a chip) used in the terminal device. The apparatus has a function of implementing any implementation method in the second aspect or the third aspect. The function may be implemented by hardware, or may be implemented by hardware executing corresponding software. The hardware or software includes one or more modules corresponding to the functions.

According to a sixth aspect, an embodiment of this application provides a communication apparatus. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the network device in the first aspect or the method performed by the terminal device in the second aspect or the third aspect.

According to a seventh aspect, an embodiment of this application provides a computer-readable storage medium. The computer-readable storage medium is configured to store a computer program. When the computer program is run on a computer, the computer is enabled to perform the method according to the first aspect, the second aspect, or the third aspect.

According to an eighth aspect, an embodiment of this application provides a computer program product, including a computer program. When the computer program is run on a computer, the computer is enabled to perform the method according to the first aspect, the second aspect, or the third aspect.

According to a ninth aspect, a chip system is provided, including a processor and an interface. The processor is configured to invoke instructions from the interface and run the instructions, to enable the chip system to implement the method according to the first aspect, the second aspect, or the third aspect.

For beneficial effects of the second aspect to the ninth aspect, refer to beneficial effects of the first aspect. Details are not described.

BRIEF DESCRIPTION OF DRAWINGS

FIG. 1 is a diagram of an architecture of a communication system according to an embodiment of this application;
FIG. 2 is a diagram of a protocol stack between a terminal device and a network device according to an embodiment of this application;
FIG. 3 is a flowchart of performing channel estimation by a terminal device;
FIG. 4 is a scenario diagram of a channel change according to an embodiment of this application;
FIG. 5 is a flowchart of a communication method according to an embodiment of this application;
FIG. 6 is a schematic exploded view of a channel matrix according to an embodiment of this application;
FIG. 7 is a diagram of channel information feedback according to an embodiment of this application;
FIG. 8 is a diagram of a structure of a communication apparatus according to an embodiment of this application; and
FIG. 9 is a diagram of a structure of a communication device according to an embodiment of this application.

DESCRIPTION OF EMBODIMENTS

This application provides a communication method and device, to reduce channel information transmission overheads. The method and the device are based on a same technical concept. Because problem-resolving principles of the method and the device are similar, mutual reference may be made to implementations of the device and the method. Repeated descriptions are not described.

The following describes some terms in this application, to facilitate understanding by a person skilled in the art.

(1) Precoding technology: In a communication system, when a channel state is known, a sending device may precode to-be-sent data by using a precoding matrix that matches the channel state, so that precoded data adapts to a channel, to reduce complexity of eliminating inter-channel impact by a receiving device. Therefore, precoding the to-be-sent data can improve quality (for example, a signal to interference plus noise ratio (signal to interference plus noise ratio, SINR)) of data received by the receiving device.

(2) Channel reciprocity: In some communication mode (for example, time division duplexing (time division duplexing, TDD)) systems, on uplink and downlink channels, signal transmission is performed by using a same frequency domain resource and different time domain resources. Therefore, within short time (for example, channel propagation coherence time), it may be considered that signals on the uplink and downlink channels experience same channel fading. Based on reciprocity between the uplink and downlink channels, a network device may measure the uplink channel, and may estimate the downlink channel based on the uplink channel, so that a precoding matrix for downlink transmission can be determined.

In a frequency division duplexing (frequency division duplexing, FDD) system, because a frequency band interval between a frequency band used by an uplink channel and a frequency band used by a downlink channel is far greater than a coherence bandwidth, the uplink channel and the downlink channel do not have complete reciprocity.

(3) Base: The base includes, for example, a space domain base, a frequency domain base, a space-frequency domain base, an angle domain base, a delay domain base, a time domain base, or a Doppler domain base that is used by a terminal device in a communication system to obtain CSI.

In embodiments of this application, the foregoing bases may also be respectively referred to as a space domain matrix, a frequency domain matrix, a space-frequency domain matrix, an angle domain matrix, a delay domain matrix, a time domain matrix, and a Doppler domain matrix.

(4) Space domain matrix: The space domain matrix may be understood as a precoding vector for performing beamforming on a reference signal. A reference signal emitted by a sending device (for example, a network device) may have specific spatial directivity through beamforming. Therefore, a process of precoding the reference signal based on the space domain matrix may also be considered as a space domain precoding process. Discrete Fourier transform (discrete Fourier transform, DFT) may be performed on the space domain matrix to obtain an angle domain matrix.

Optionally, a length of the space domain matrix may be a quantity M of transmit antenna ports in one polarization direction, and $M$ is a positive integer greater than 1. For example, the space domain matrix may be a column vector or a row vector whose length is $M$, and in this case, the M column vectors or row vectors respectively correspond to the $M$ transmit antenna ports. This is not limited in this application. Each element in the space domain matrix may represent a weight of each antenna port. Signals of the antenna ports are linearly superposed based on the weight of each antenna port that is represented by each element in the space domain matrix, so that an area with a strong signal may be formed in a direction or some directions in space.

Optionally, the space domain matrix may be determined based on a DFT matrix. In other words, the space domain matrix may be a DFT matrix. The space domain matrix may be, for example, a DFT matrix defined in a type II (type II) codebook in a 3rd generation partnership project (3rd generation partnership project, 3GPP) technical specification.

(5) Frequency domain matrix: The frequency domain matrix may be representing a change rule of a channel in frequency domain. DFT may be performed on the frequency domain matrix to obtain a delay domain matrix.

Precoding a reference signal based on the frequency domain matrix may essentially be performing phase rotation on each frequency domain unit in frequency domain based on an element in the frequency domain matrix, to pre-compensate, by using a precoded reference signal, for a frequency domain characteristic caused by a multipath delay. Therefore, a process of precoding the reference signal based on the frequency domain matrix may be considered as a frequency domain precoding process.

(6) Space-frequency domain matrix: One space-frequency domain matrix may be a combination of one space domain matrix and one frequency domain matrix. Any two space-frequency domain matrices include at least one different space domain matrix and frequency domain matrix. In other words, each space-frequency domain matrix may be uniquely determined based on one space domain matrix and one frequency domain matrix.

(7) Antenna port (referred to as a port for short): The antenna port may include a transmit antenna port and a receive antenna port. To avoid ambiguity, the following descriptions are provided herein. The transmit antenna port may be an antenna port of a signal sending device, and the receive antenna port may be an antenna port of a signal receiving device. In embodiments of this application, the transmit antenna port may be a port of a network device end, and the receive antenna port may be a port of a terminal device end.

(8) Downlink channel corresponding to a terminal device: The downlink channel corresponding to the terminal device is a channel used by a network device to send a signal to the terminal device, and may be further referred to as a downlink channel between the network device and the terminal device, or a downlink channel of the terminal device.

(9) "And/Or": The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

In embodiments of this application, "a plurality of" means two or more. "At least one" means one or more.

In embodiments of this application, descriptions such as "when", "in a case", and "if" mean that a device (for example, a terminal device or a network device) performs corresponding processing in an objective case, and are not intended to limit time, and the device (for example, the terminal device or the network device) is not required to perform a determining action during implementation, and do not mean any other limitation.

In embodiments of this application, "indicate" may include "directly indicate" and "indirectly indicate". When a piece of indication information indicates A, the indication information may directly indicate A or indirectly indicate A, but it does not indicate that the indication information definitely carries A. In an example in which first information indicates first content, the first information may include the first content, or may include a part of the first content or an identifier, an index, or the like of the first content, or may include an algorithm, a calculation parameter, or the like for determining the first content. An "indicating" manner is not limited in this application.

In embodiments of this application, "including A" may be equivalent to "including A information". The A information indicates A.

Optionally, in embodiments of this application, a "matrix" may be equivalent to a "vector", and the "matrix" and the "vector" may be replaced with each other. A superscript $H$ represents conjugate transpose. For example, $\mathbf{A}^H$ represents conjugate transpose of a matrix (or vector) $\mathbf{A}$. For brevity, descriptions of same or similar cases are omitted below.

$\mathbb{C}$ represents a complex number set in this application. $\mathbb{E}$ represents calculation of an expectation for a random number/matrix.

In addition, it should be understood that, in descriptions of this application, terms such as "first" and "second" are merely used for distinguishing descriptions, but should not be understood as indicating or implying relative importance, or should not be understood as indicating or implying a sequence.

A technology provided in embodiments of this application may be applied to a plurality of communication systems, for example, a cellular system that supports the 3rd generation partnership project (3rd generation partnership project, 3GPP), a 4th generation (4th generation, 4G) mobile communication technology system, a 5G system, or a future 6th generation (6th generation, 6G) mobile communication technology system; or a system that supports short-range communication, for example, a wireless fidelity (wireless fidelity, Wi-Fi) system; or a communication system that supports integration of a plurality of wireless technologies; or a future-oriented evolved system. The communication system at least includes a terminal device and a network device.

The terminal device may be a device having a wireless transceiver function, for example, may be a fixed device, a mobile device, a handheld device (for example, a mobile phone), a wearable device, a vehicle-mounted device, or a wireless apparatus (for example, a communication module, a modem, or a circuit system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearables, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

The network device includes, for example, an access network device, and/or a core network device. The access network device is a device having a wireless transceiver function, and is configured to communicate with the terminal device. The access network device includes but is not limited to a NodeB (NodeB) in the communication system, an evolved NodeB (eNodeB/eNB, or gNodeB/gNB), a transmission reception point (transmission reception point, TRP), a subsequently evolved base station in the 3GPP, an access node in the Wi-Fi system, a wireless relay node, a wireless backhaul node, and the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU), and/or a distributed unit (distributed unit, DU) in a cloud radio access network (cloud radio access network, CRAN) scenario. Alternatively, the network device may be a server, a wearable device, a vehicle-mounted device, or the like. For example, a network device in a vehicle to everything (vehicle to everything, V2X) technology may be a roadside unit (roadside unit, RSU). The following uses an example in which the access network device is a base station for description. A plurality of network devices in the communication system may be base stations of a same type, or may be base stations of different types. The base station may communicate with the terminal device, or may communicate with the terminal device through a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a user plane function (user plane function, UPF), or the like. In the following descriptions, the "network device" is, for example, an "access network device" or a "core network device".

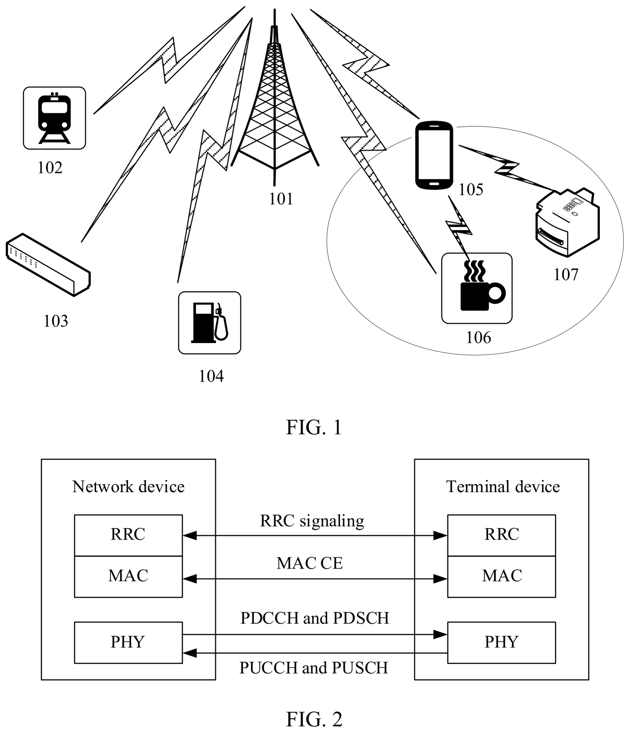

FIG. 1 shows a communication system 100 to which a technology provided in embodiments of this application may be applied. The communication system 100 includes at least one network device, for example, a network device 101 shown in FIG. 1. The communication system 100 may further include at least one terminal device, for example, terminal devices 102 to 107 shown in FIG. 1. The terminal devices 102 to 107 may be movable, or the terminal devices 102 to 107 may be fixed. The network device 101 may communicate with one or more of the terminal devices 102 to 107. For example, the network device may send configuration information to the terminal device, and the terminal device may send uplink data to the network device based on the configuration information. For another example, the network device may send downlink data to the terminal device.

Optionally, the terminal devices in the communication system 100 may also directly communicate with each other. For example, direct communication between the terminal devices may be implemented by using a D2D technology, a short-range wireless communication technology, or the like. As shown in FIG. 1, direct communication between the terminal devices 105, 106, and 107 may be performed by using a sidelink (sidelink, SL) technology, the device-to-device (device-to-device, D2D) technology, or the short-range wireless communication technology. The short-range wireless communication technology may include but is not limited to: a radio frequency identification (radio frequency identification, RFID) technology, a Bluetooth technology, a wireless fidelity (wireless fidelity, Wi-Fi) technology, a ZigBee (ZigBee) technology, an ultra wideband (ultra wideband, UWB) technology, a near field communication (near field communication, NFC) technology, a communication technology evolved based on the foregoing communication technology, and a communication technology that has a same or similar function as the foregoing communication technology and that can be replaced with the foregoing communication technology.

Optionally, the terminal devices 105 to 107 may separately communicate with the network device 101. For example, the terminal devices 105 and 106 may directly communicate with the network device 101. For another example, the terminal device 107 may indirectly communicate with the network device 101 through the terminal device 105.

Optionally, the communication system may include a plurality of network devices. Within coverage of each network device, there may be another quantity of terminal devices, for example, there may be more or fewer terminal devices. This is not limited in this application.

A plurality of antennas may be configured for various communication devices in the foregoing communication system, for example, the network device 101 and the terminal devices 102 to 107 in FIG. 1. The plurality of antennas may include at least one transmit antenna configured to send a signal and at least one receive antenna configured to receive a signal.

In the communication system shown in FIG. 1, a wireless communication connection may be established between the terminal device and the network device through a Uu interface. The Uu interface generally includes a control plane protocol stack and a user plane protocol stack. The user plane protocol stack includes at least the following protocol layers: a physical (physical, PHY) layer, a medium access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer. The control plane protocol stack includes at least the following protocol layers: a PHY layer, a MAC layer, an RLC layer, a PDCP layer, and a radio resource control (radio resource control, RRC) layer. The network device and the terminal device include entities (function modules or processing units) that are configured to implement functions of different protocol layers in the protocol stacks. Based on the foregoing descriptions of the protocol stacks in the Uu interface, as shown in FIG. 2, the terminal device and the network device include at least RRC entities (RRC for short in the figure), MAC entities (MAC for short in the figure), and PHY entities (PHY for short in the figure).

As shown in FIG. 2, in the terminal device or the network device, the RRC entity is configured to implement RRC signaling transmission, the MAC entity is configured to implement MAC control element (MAC control element, MAC CE) transmission, and the PHY entity is configured to implement transmission of uplink/downlink control signaling and uplink/downlink data. For example, the PHY entity in the network device may send downlink control signaling (for example, downlink control information (downlink control information, DCI)) to the PHY entity in the terminal device through a physical downlink control channel (physical downlink control channel, PDCCH), and send downlink data to the PHY entity in the terminal device through a physical downlink shared channel (physical downlink shared channel, PDSCH). The PHY entity in the terminal device may send uplink control signaling to the PHY entity in the network device through a physical uplink control channel (physical uplink control channel, PUCCH), and send uplink data to the PHY entity in the network device through a physical uplink shared channel (physical uplink shared channel, PUSCH).

To improve spectral efficiency of the system, the communication system shown in FIG. 1 may support a MIMO technology. When sending downlink data to the terminal device by using the MIMO technology, the network device may perform modulation and coding, and signal precoding. When the network device performs signal precoding on the downlink data, CSI of a downlink channel needs to be determined.

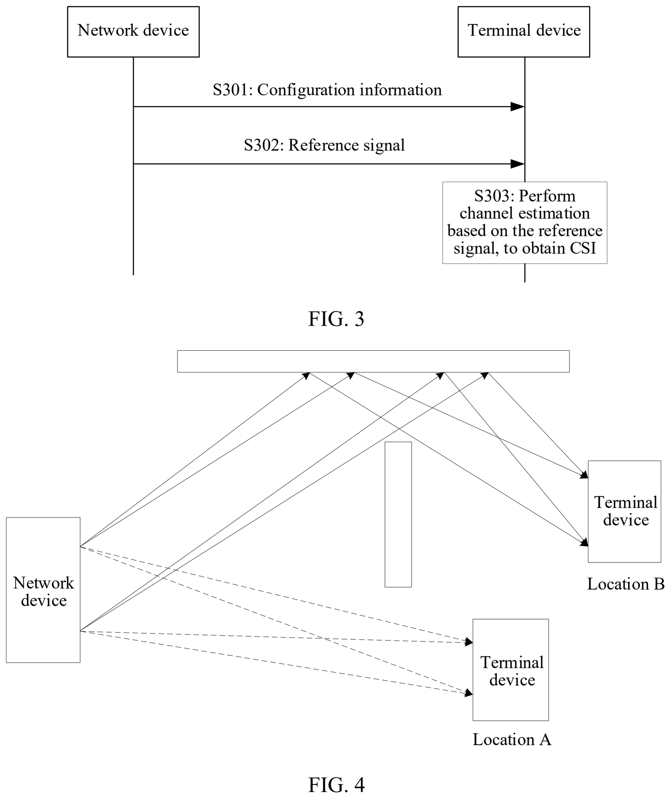

In an FDD system, an uplink channel and a downlink channel do not have complete reciprocity, and a network device cannot directly obtain accurate CSI of the downlink channel by using channel information of the uplink channel. In a TDD system, when a channel sounding reference signal (sounding reference signal, SRS) has a low signal-to-noise ratio, uplink channel estimation quality is low, and accuracy of CSI of a downlink channel obtained by a network device by using channel information of an uplink channel is low. Therefore, in the FDD system or the TDD system in which an uplink SRS has a low signal-to-noise ratio, the network device needs to rely on a terminal device to perform channel measurement (also referred to as CSI measurement or channel estimation) and feed back the CSI. For example, for a specific process in which a terminal device performs channel estimation, refer to FIG. 3. The process includes the following steps.

S301: A network device sends configuration information to the terminal device.

The configuration information is for notifying the terminal device of time and a behavior for performing channel estimation. The time for performing channel estimation may be, for example, a periodicity for performing channel estimation by the terminal device. The periodicity is, for example, a transmission time interval of a reference signal (where the reference signal may also be referred to as a pilot signal in the following embodiments). Optionally, the network device may send the configuration information to the terminal device by using higher layer signaling. The higher layer signaling includes but is not limited to RRC signaling or a MAC CE.

S302: The network device sends a reference signal to the terminal device. Correspondingly, the terminal device receives the reference signal from the network device.

The reference signal is for channel measurement, and may also be referred to as a channel measurement pilot signal or a pilot signal. For example, the reference signal may be a CSI-reference signal (CSI-reference signal, CSI-RS), a synchronization signal and physical broadcast channel (physical broadcast channel, PBCH) block (synchronization signal and PBCH block, SSB), a demodulation reference signal (demodulation reference signal, DMRS), or the like. When the reference signal is described below, the CSI-RS is used as an example.

S303: The terminal device performs channel estimation based on the reference signal, to obtain CSI.

In a process of calculating the CSI, the terminal device needs to perform channel estimation by using a channel covariance matrix. Generally, the channel covariance matrix used by the terminal device to perform channel estimation is obtained by performing filtering on a downlink channel covariance matrix obtained at a historical moment. For example, the channel covariance matrix used by the terminal device to perform channel estimation is denoted as $\widetilde{R}_h^t$, and $\widetilde{R}_h^t$ may be obtained according to the following formula 1:

$$\widetilde{R}_h^t = \alpha \times \widetilde{R}_h^{t-2} + (1 - \alpha) \times \widetilde{R}_h^{t-1} \qquad \text{(Formula 1)}$$

$\widetilde{R}_h^{t-2}$ is a channel covariance matrix obtained at a moment t-2. $\widetilde{R}_h^{t-1}$ is a channel covariance matrix obtained at a moment t-1. $\alpha$ is a filtering coefficient.

In the foregoing technical solution, the channel covariance matrix for channel estimation is obtained based on a historical channel covariance matrix, for example, obtained by performing filtering on the historical channel covariance matrix. When a channel environment change shown in FIG. 4 occurs, the channel covariance matrix obtained based on the historical channel covariance matrix has low accuracy. For example, refer to FIG. 4. When a user (a terminal device of the user) moves from a location A to a location B, most paths of a channel change, and a channel environment changes greatly. In this case, if a channel covariance matrix obtained at the location A (a historical moment) is for determining a channel covariance matrix at the location B (a current moment), a difference between the obtained channel covariance matrix corresponding to the location B and a real channel covariance matrix is large, resulting in low accuracy of the obtained CSI.

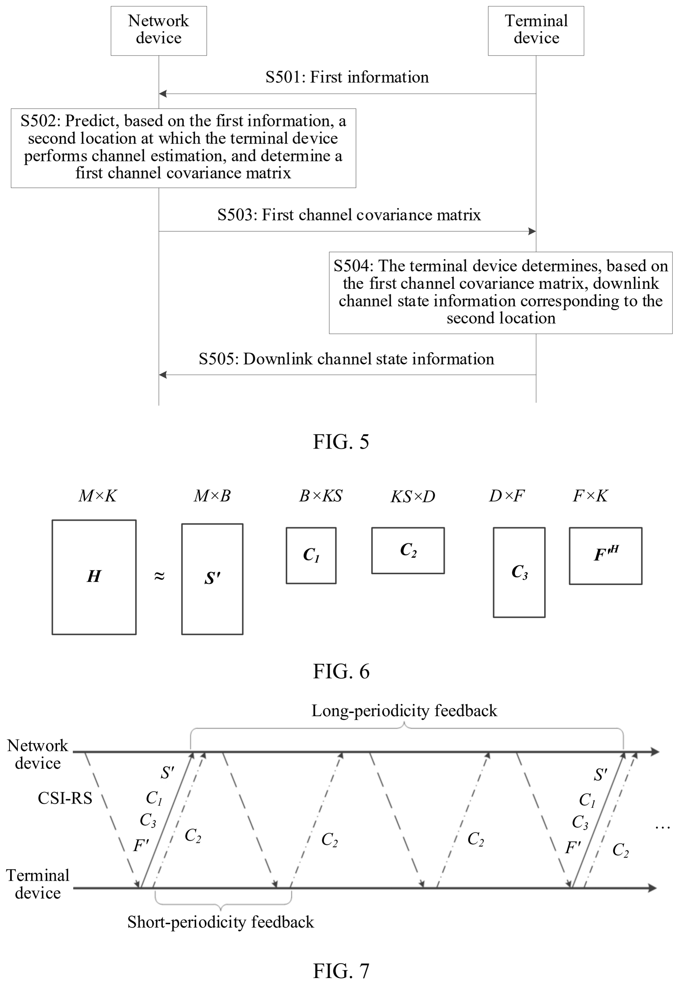

Therefore, to improve accuracy of obtained CSI, an embodiment of this application provides a communication method, and the method may be applied to the communication system shown in FIG. 1. FIG. 5 is a flowchart of a communication method according to an embodiment of this application.

S501: A terminal device sends first information to a network device. Correspondingly, the network device receives the first information from the terminal device. The first information includes information about a first location and a movement speed of the terminal device, and the first location is a current location of the terminal device.

The information about the first location may be geographical location information (such as latitude and longitude information), a virtual location, or a location fingerprint of the terminal device. Optionally, if the first location is the virtual location of the terminal device, there is a correspondence between the virtual location and a real location of the terminal device, in other words, the location fingerprint may be for determining the real location of the terminal device. For example, the location fingerprint is information that can represent the real location of the terminal device. For example, the location fingerprint may be reference signal received powers (reference signal received powers, RSRPs) of a plurality of cells or base stations measured by the terminal device, and the plurality of RSRPs may be for calculating the real location of the terminal device.

Optionally, the terminal device may send the first information to the network device in the following manners.

Manner A: The terminal device may periodically send the first information to the network device. A periodicity in which the terminal device sends the first information to the network device may be the same as a periodicity in which the terminal device performs channel estimation. For example, the terminal device may send the first information to the network device at the beginning of each channel estimation periodicity.

Manner B: The terminal device may send the first information to the network device when determining that the movement speed satisfies a first condition. When the terminal device determines that the movement speed satisfies the first condition, it indicates that the movement speed of the terminal device is high, the terminal device is more likely to experience the channel environment change shown in FIG. 4, and accuracy of a channel covariance matrix obtained by the terminal device based on historical information is low. In this case, the terminal device may send the first information to the network device. In addition, if the terminal device determines that the movement speed is less than or equal to a second threshold, it indicates that the movement speed of the terminal device is low, a probability that the terminal device experiences the channel environment change shown in FIG. 4 is low, and accuracy of a channel covariance matrix obtained by the terminal device based on historical information is high. In this case, the terminal device may not send the first information to the network device. In this way, a quantity of times that the terminal device sends the first information to the network device can be reduced, thereby reducing signaling interaction between the terminal device and the network device and saving resources.

Optionally, before performing S501, the network device may further perform the step of S301. For a specific execution process, refer to related content of S301. Details are not described herein again.

S502: The network device predicts, based on the first information, a second location at which the terminal device performs channel estimation, and determines a first channel covariance matrix. The first channel covariance matrix is a channel covariance matrix of a downlink channel corresponding to the second location, and the first channel covariance matrix is for determining downlink channel state information.

As described in S501, the information about the first location included in the first information sent by the terminal device to the network device may be the geographical location information (such as the longitude and latitude information), the virtual location, or the location fingerprint of the terminal device. Therefore, if the information about the first location included in the first information is the virtual location of the terminal device, the network device may determine the real location of the terminal device based on the correspondence between the virtual location and the real location. If the information about the first location included in the first information is the location fingerprint of the terminal device, the network device may calculate the real location of the terminal device based on the location fingerprint. For example, if the location fingerprint is the RSRPs of the plurality of cells or base stations measured by the terminal device, the network device may calculate the real location of the terminal device based on the plurality of RSRPs.

After determining the real location of the terminal device, the network device may predict, based on the real location and the movement speed of the terminal device, the second location that the terminal device may reach when performing channel estimation. The movement speed of the terminal device includes a value of the movement speed of the terminal device and a movement direction of the terminal device.

After predicting the second location at which the terminal device performs channel estimation, the network device may determine the first channel covariance matrix corresponding to the second location. Optionally, the first channel covariance matrix is a channel statistical covariance matrix.

Optionally, the network device may determine the first channel covariance matrix based on environment information of the second location. For example, the network device may perform ray tracing simulation based on the environment information of the second location, to obtain the first channel covariance matrix corresponding to the second location. The environment information may also be referred to as an environment map, an electronic map, a digital map, or the like, and the environment information may indicate an ambient environment of the second location. For example, the environment information may indicate an environment scatterer, for example, a building or a river around the second location.

Alternatively, the network device may further divide the environment map into grids in advance, to obtain central location information of each grid; perform ray tracing simulation based on the central location information of each grid, to obtain a channel covariance matrix corresponding to each grid; and store the channel covariance matrix corresponding to each grid. After determining the second location, the network device may determine a grid including the second location, and use a channel covariance matrix corresponding to the grid as the first channel covariance matrix.

Optionally, the network device may further indicate the terminal device to report, after the terminal device performs channel estimation, a channel covariance matrix for channel estimation. The network device may establish an association relationship between the channel covariance matrix and a location. The network device may obtain, based on the association relationship, a channel covariance matrix corresponding to the second location. Optionally, the network device may further optimize the association relationship. For example, after receiving channel covariance matrices corresponding to second locations reported by a plurality of terminal devices, the network device may optimize, based on the channel covariance matrices reported by the plurality of terminal devices, a channel covariance matrix in an association relationship between the channel covariance matrix and the second location.

S503: The network device sends the first channel covariance matrix to the terminal device. Correspondingly, the terminal device receives the first channel covariance matrix from the network device.

Optionally, when sending the first channel covariance matrix to the terminal device, the network device may further send a pilot signal to the terminal device. For example, for a manner in which the network device sends the pilot signal to the terminal device, refer to S302. Details are not described herein again. Optionally, the first channel covariance matrix and the pilot signal may be sent by using same signaling, or may be sent by using different signaling.

Optionally, the network device may send the first channel covariance matrix to the terminal device in the following manners.

Manner 1: The network device may directly send the first channel covariance matrix to the terminal device.

Manner 2: Before the network device sends the first channel covariance matrix to the terminal device, the network device may further determine a second channel covariance matrix obtained by the terminal device in a previous channel estimation periodicity, where the previous channel estimation periodicity is, for example, a previous channel estimation periodicity before a current moment of the terminal device. Optionally, the network device may obtain CSI that is reported by the terminal device after the terminal device performs channel estimation in the previous channel periodicity, and determine the second channel covariance matrix based on the CSI. Alternatively, the network device may determine, based on the information about the first location reported by the terminal device, a location (for example, a third location) at which the terminal device performs channel estimation in the previous channel estimation periodicity, and determine a channel covariance matrix corresponding to the third location. The channel covariance matrix is the second channel covariance matrix. Alternatively, the network device may further obtain a channel covariance matrix sent to the terminal device in the previous channel estimation periodicity, and determine the channel covariance matrix as the second channel covariance matrix. An implementation of determining the second channel covariance matrix is not limited in this embodiment of this application.

After obtaining the first channel covariance matrix and the second channel covariance matrix, the network device may determine a degree $R_{mse}$ of variation of the first channel covariance matrix relative to the second channel covariance matrix. For example, the network device may determine $R_{mse}$ based on the following formula 2:

$$R_{mse} = \frac{\|R - R'\|}{\|R\|} \qquad\qquad \text{(Formula 2)}$$

$R$ is the first channel covariance matrix. $R'$ is the second channel covariance matrix. $\|x\|$ represents calculating a matrix norm.

If $R_{mse}$ satisfies the first condition (for example, $R_{mse} > \theta$), it may be considered that the channel environment changes greatly, and the network device may send the first channel covariance matrix to the terminal device.

Manner 3: The network device may further receive, from the terminal device, second information indicating that the terminal device has a channel covariance matrix update requirement, and send the first channel covariance matrix to the terminal device when the second information is received. Optionally, the second information may be sent together with the first information, or the second information may be carried in the first information for sending, or the first information is carried in the second information for sending, or the second information may be sent by the terminal device after receiving a request from the network device for requesting the terminal device to report whether there is a channel covariance matrix update requirement. Reporting whether there is a channel covariance matrix update requirement by the terminal device may be implemented by sending different information to the network device by the terminal device, where the different information indicates whether there is a channel covariance matrix update requirement. Alternatively, reporting whether there is a channel covariance matrix update requirement by the terminal device may be implemented by sending feedback information to the network device by the terminal device, where the feedback information carries an indication indicating whether there is a channel covariance matrix update requirement. For example, if indication information included in the feedback information is 1, it indicates that there is a channel covariance matrix update requirement; or if indication information included in the feedback information is 0, it indicates that there is no channel covariance matrix update requirement.

Optionally, if the network device determines that $R_{mse} > \theta$, the network device may further send third information to the terminal device, where the third information is for requesting the terminal device to report whether there is a channel covariance matrix update requirement. For example, the network device may send the third information to the terminal device by using RRC signaling.

If the terminal device has a channel covariance matrix update requirement, the network device may send the second information to the terminal device. If the terminal device has no channel covariance matrix update requirement, the terminal device may send fourth information to the network device, where the fourth information indicates that there is no channel covariance matrix update requirement; or the terminal device may not send information to the network device.

Therefore, if the network device receives the second information after sending the third information to the terminal device, the network device sends the first channel covariance matrix to the terminal device. If the network device receives the fourth information after sending the third information to the terminal device, or if the network device receives no information from the terminal device within preset duration, the network device may determine that the terminal device has no channel covariance matrix update requirement, and the network device may not send the first channel covariance matrix to the terminal device.

Optionally, the first channel covariance matrix may include a space domain covariance matrix, a frequency domain covariance matrix, and/or a joint space-frequency covariance matrix. An example in which the first channel covariance matrix includes the space domain covariance matrix and the frequency domain covariance matrix is used. Before sending the first channel covariance matrix to the terminal device, the network device may further perform the following decomposition on the space domain covariance matrix and the frequency domain covariance matrix:

$$R_S = U_S \Lambda_S U_S^H \qquad \text{(Formula 3)}$$

$$R_F = U_F \Lambda_F U_F^H \qquad \text{(Formula 4)}$$

$$U_S = S' C_1 \qquad \text{(Formula 5)}$$

$$U_F = F' C_3^H \qquad \text{(Formula 6)}$$

$R_S$ is the space domain covariance matrix. $U_S$ is a matrix formed by an eigenvector of $R_S$. An eigenvalue corresponding to each column of $U_S$ is an element on a diagonal of a diagonal matrix $\Lambda_S$. Elements on the diagonal of $\Lambda_S$ are arranged in descending order. $R_S \in \mathbb{C}^{M \times M}$. $U_S \in \mathbb{C}^{M \times K_S}$. $\Lambda_S \in \mathbb{C}^{K_S \times K_S}$. $M$ is a quantity of transmit antenna ports. $K_S$ represents an effective dimension of a space domain eigenspace. $R_F$ is the frequency domain covariance matrix. $U_F$ is a matrix formed by an eigenvector of $R_F$. An eigenvalue corresponding to each column of $U_F$ is an element on a diagonal of a diagonal matrix $\Lambda_F$. Elements on the diagonal of $\Lambda_F$ are arranged in descending order.

$R_F \in \mathbb{C}^{K \times K}$. $U_F \in \mathbb{C}^{K \times D}$. $\Lambda_F \in \mathbb{C}^{D \times D}$. $K$ is a quantity of frequency domain units, that is, a length of a frequency domain vector. $D$ represents an effective dimension of a frequency domain eigenspace. $S'$ is a space domain base. $F'$ is a frequency domain base. $C_1$ is a superposition coefficient matrix 1 representing a projection coefficient of an eigenspace of a space domain statistical covariance matrix of a downlink channel on the space domain base, and may be for correcting the space domain base, and therefore, $C_1$ may also be referred to as a space domain base correction matrix. $C_3$ is a superposition coefficient matrix 3 representing a projection coefficient of an eigenspace of a frequency domain statistical covariance matrix of the downlink channel on the frequency domain base, and may be for correcting the frequency domain base, and therefore, $C_3$ may also be referred to as a frequency domain base correction matrix.

After decomposing the space domain covariance matrix and the frequency domain covariance matrix, the network device may send, to the terminal device, $S'$, $F'$, $C_1$, and $C_3$ that are obtained through decomposition.

Optionally, before sending the first channel covariance matrix to the terminal device, the network device may further determine a size of the first channel covariance matrix. If a data amount of the first channel covariance matrix is greater than a first threshold, the network device may compress the first channel covariance matrix. For example, the network device may compress the first channel covariance matrix $R$ according to the following formula 7 and formula 8:

$$R = U \Lambda U^H \qquad \text{(Formula 7)}$$

$$U = WC \qquad \text{(Formula 8)}$$

If the first channel covariance matrix is the space domain covariance matrix, the formula 7 is the foregoing formula 3. If the first channel covariance matrix is the frequency domain covariance matrix, the formula 7 is the foregoing formula 4.

If the first channel covariance matrix is the joint space-frequency covariance matrix, $R \in \mathbb{C}^{MK \times MK}$. $U$ is a matrix formed by an eigenvector of $R$. An $i^{th}$ column of $U$ is an $i^{th}$ eigenvector of $R$. An eigenvalue corresponding to the $i^{th}$ eigenvector is an $i^{th}$ element on a diagonal of a diagonal matrix $\Lambda$. An eigenvalue corresponding to each column of $U$ is an element on the diagonal of the diagonal matrix $\Lambda$. Elements on the diagonal of $\Lambda$ are arranged in descending order.

$W \in \mathbb{C}^{M \times P}$ and is a codebook agreed on by the network device and the terminal device, for example, an oversampled DFT codebook. $C \in \mathbb{C}^{P \times R}$ and is a superposition coefficient matrix, where $P$ represents a quantity of DFT vectors of a channel covariance matrix, and $R$ is a quantity of superposition coefficients. In this way, when sending the first channel covariance matrix to the terminal device, the network device may send only the elements on the diagonal of the diagonal matrix $\Lambda$, a codebook index value of $W$, and elements of the superposition coefficient matrix $C$. When there are a large quantity of antennas, overheads can be reduced.

For example, if the network device is configured with 64 antenna ports, the matrix $U$ formed by 16 DFT column vectors is used, that is, $P$ = 16, and a superposition coefficient is 8, that is, R = 8, a quantity of coefficients that need to be delivered by the network device is $R + P + P \times R$ = 152. However, when the network device directly sends $R$ to the terminal device, a quantity of coefficients that need to be sent is $M \times M$ = 4096. It can be learned that, after the first channel covariance matrix is compressed, a quantity of coefficients sent by the network device to the terminal device is far less than a quantity of coefficients that need to be sent if the network device directly sends the first channel covariance matrix to the terminal device, so that overheads are reduced. Optionally, for example, any other compression manners may be used to compress the first channel covariance matrix. A manner of compressing the first channel covariance matrix is not limited in this embodiment of this application.

After receiving the first channel covariance matrix which is compressed from the network device, the terminal device may further decompress, by using a corresponding decompression algorithm, the first channel covariance matrix which is compressed, to obtain the first channel covariance matrix.

S504: The terminal device determines, based on the first channel covariance matrix, downlink channel state information corresponding to the second location.

The downlink channel state information includes but is not limited to one or more of the following information: a rank indication (rank indication, RI), a channel quality indicator (channel quality indicator, CQI), a precoding matrix indication (precoding matrix indication, PMI), a CSI-RS resource indicator (CSI-RS resource indicator, CRI), a layer indicator (layer indicator, LI), a synchronization signal block resource indicator (SS/PBCH block resource indicator, SSBRI), and/or the like. The RI is for determining a quantity of streams of downlink data transmitted to the terminal device. The CQI is for determining a modulation and coding scheme (modulation and coding scheme, MCS) for data sent to the terminal device. The PMI indicates channel information of a downlink channel corresponding to the terminal device. For example, the channel information may include information for reconstructing the downlink channel corresponding to the terminal device, including a base, a coefficient, and the like. For different methods for obtaining the CSI by the terminal device, the channel information of the downlink channel indicated by the PMI may also be different. The CRI indicates an index of a CSI-RS resource recommended by the terminal device. The LI indicates a column of a precoding matrix corresponding to the PMI, and the column corresponds to a strongest layer of a codeword with a large wideband CQI. The SSBRI is a resource index corresponding to an SSB.

Optionally, the terminal device may perform channel estimation based on a received signal and a sent signal, to obtain the CSI. Optionally, the received signal $r$ is obtained through convolution of the sent signal (for example, a CSI-RS) and an equivalent channel impulse response and noise addition. Assuming that a receive antenna of the terminal device is a single antenna, a transmit antenna of the network device is a single polarization antenna, and M transmit antenna ports are included in a single polarization direction, the received signal $r$ received by the terminal device may be represented according to the following formula 9:

$$r = Xh + n \qquad \text{(Formula 9)}$$

$r \in \mathbb{C}^{N \times 1}$, $h \in \mathbb{C}^{M \times 1}$, and $r$ and $h$ are channel vectors. $X \in \mathbb{C}^{N \times M}$ and is a pilot signal matrix. $n \in \mathbb{C}^{N \times 1}$ and is a noise vector. $N$ is a pilot signal length, for example, a quantity of frequency domain units or a time domain transmission time interval (transmission time interval, TTI). Noise is, for example, white Gaussian noise.

Based on the foregoing formula 9, the network device sends a pilot signal $X$ on a selected time-frequency resource, and the terminal device may estimate a channel $h$ by using the pilot signal $X$. Optionally, during estimation of the channel $h$, if a linear minimum mean square error (linear minimum mean square error, LMMSE) algorithm is used, a corresponding optimization objective is that an estimated value $\hat{h}_{LMMSE}$ of $h$ has a linear relationship with $r$, and a mean square error that needs to be estimated is minimum, in other words, the following formula 10 and formula 11 are satisfied:

$$\hat{h}_{LMMSE} = min\mathbb{E}\left\{\left\|\hat{h} - h\right\|^2\right\} \qquad \text{(Formula 10)}$$

$$s.t.\ \widehat{h}_{LMMSE} = Ar \qquad \text{(Formula 11)}$$

*min* represents taking a minimum value. $\|x\|^2$ represents taking a square value of a matrix norm. *s.t.* is a constraint condition. A channel matrix may be obtained by solving the foregoing formula 10 and formula 11. For example, refer to the following formula 12:

$$\widehat{h}_{LMMSE} = (X^{H}XR + \sigma_n^2 I)^{-1}X^{H} \qquad \text{(Formula 12)}$$

$\sigma_n^2$ is a noise power value. $I$ is a unit matrix. $R$ is the first channel covariance matrix. $\widehat{h}_{LMMSE}$ is a channel matrix obtained by performing channel estimation by the terminal device.

Optionally, if the first channel covariance matrix includes the space domain covariance matrix and the frequency domain covariance matrix, or the first channel covariance matrix includes the joint space-frequency covariance matrix, after obtaining the CSI, the terminal device may further perform the following S505.

S505: The terminal device sends the downlink channel state information to the network device. Correspondingly, the network device receives the CSI from the terminal device.

Optionally, the network device may reconstruct a downlink channel based on the following formula 13:

$$\widehat{H} = U_S C_2 U_F^H \qquad \text{(Formula 13)}$$

$\widehat{H}$ is a reconstructed downlink channel. For related explanations of $U_S$, refer to the formula 5. For related explanations of $U_F$, refer to the formula 6. $C_2$ is a superposition coefficient matrix 2 representing a projection coefficient of a downlink instantaneous channel on $S'C_1C_3F'^{H}$. Therefore, when the terminal device sends the CSI to the network device, the codebook $W$ used by the terminal device to feed back the PMI may satisfy the following formula 14:

$$W = S'C_1 C_2 C_3 F'^{H} \qquad \text{(Formula 14)}$$

$W \in \mathbb{C}^{M \times F}$. $S' \in \mathbb{C}^{M \times B}$. $C_1 \in \mathbb{C}^{B \times K_S}$. $C_2 \in \mathbb{C}^{K_S \times D}$. $C_3 \in \mathbb{C}^{D \times F}$. $F' \in \mathbb{C}^{K \times F}$. $B$ represents a quantity of space domain vectors. F represents a quantity of frequency domain vectors. For explanations of other parameters, refer to explanations of corresponding parameters in the formula 3 to the formula 6.

For ease of understanding, the following provides descriptions with reference to a schematic exploded view of a channel matrix $H \in \mathbb{C}^{M \times K}$ shown in FIG. 6. Herein, it is assumed that the transmit antenna of the network device is a single polarization antenna, in other words, a quantity of rows in the channel matrix $H$ is $M$ (where $M$ is a quantity of transmit antenna ports in one polarization direction). In FIG. 6, $S' \in \mathbb{C}^{M \times B}$, $C_1 \in \mathbb{C}^{B \times K_S}$, $C_2 \in \mathbb{C}^{K_S \times D}$, $C_3 \in \mathbb{C}^{D \times F}$, and $F' \in \mathbb{C}^{K \times F}$. It can be learned that $H$ is a complex matrix with M rows and $K$ columns. Optionally, a base is a set including one or more vectors (basis vectors). For example, a space domain base includes one or more space domain vectors, and a frequency domain base includes one or more frequency domain vectors.

Optionally, the terminal device may calculate $C_2$ based on a channel estimation result (for example, $\widetilde{H}$) and $S'$, $F'$, $C_1$, and $C_3$ from the network device. For example, the terminal device may calculate $C_2$ based on the following formula 15:

$$C_2 = U_F \widetilde{H} U_S^H \qquad \text{(Formula 15)}$$

Optionally, as shown in FIG. 7, the terminal device reports $S'$, $C_1$, $C_3$, and $F'$ to the network device in a long periodicity manner, and reports $C_2$ to the network device in a short periodicity manner or aperiodically.

Optionally, because the network device may decompose the first channel covariance matrix to obtain $S'$, $F'$, $C_1$, and $C_3$, when sending CSI to the network device, the terminal device may only feed back $C_2$ to the network device. The network device may reconstruct, based on $C_2$ and $C_1$, $S'$, $C_3$, and $F$ included in the first channel covariance matrix, a channel corresponding to the second location, and restore a channel matrix (for example, $\widehat{H}$) corresponding to the second location, to be specific, reconstruct the downlink channel corresponding to the second location. In addition, the network device determines a precoding matrix based on the reconstructed downlink channel, then precodes downlink data based on the precoding matrix, and finally sends precoded downlink data to the terminal device. In this way, when the terminal device performs codebook feedback, information that needs to be fed back only includes $C_2$, and air interface overheads of the codebook feedback are small.

Optionally, in some other embodiments, when a plurality of transmission reception points (transmission reception points, TRPs) send signals to a same terminal device, a network device (for example, a base station) corresponding to a serving cell on which the terminal device camps may send a channel covariance matrix of an interference cell to the terminal device, and the terminal device may eliminate neighboring cell interference based on the channel covariance matrix of the interference cell. In some other embodiments, when a plurality of terminal devices send signals to a same TRP, a base station may obtain a channel covariance matrix of an interference user based on an environment map, to eliminate interference between the terminal devices, so as to improve performance of a communication system.

In the foregoing technical solution, the network device predicts, based on the environment information and the location information and the movement speed that are reported by the terminal device, a location that terminal device may reach when performing channel estimation, and sends, to the terminal device, a channel covariance matrix corresponding to the location, and accuracy of channel estimation performed by the terminal device based on the channel covariance matrix is high. In addition, when performing codebook feedback, the terminal device may only feed back a short-periodicity coefficient $C_2$, so that there is no feedback overhead of a long-periodicity coefficient, to effectively reduce air interface overheads of codebook feedback performed by the terminal device.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

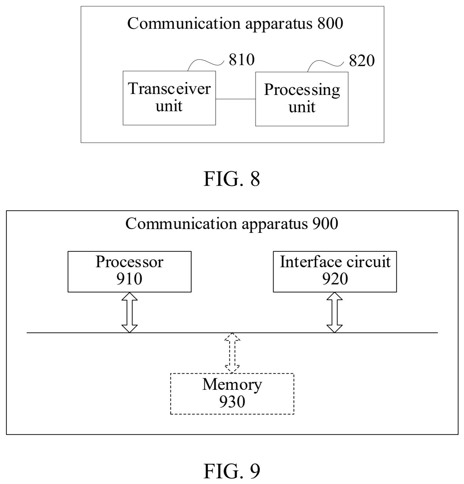

FIG. 8 and FIG. 9 are diagrams of structures of possible communication apparatuses according to an embodiment of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be one of the terminal devices 102 to 107 shown in FIG. 1, or may be the network device 101 shown in FIG. 1, or may be a module (for example, a chip) used in the terminal device or the network device.

A communication apparatus 800 shown in FIG. 8 includes a transceiver unit 810 and a processing unit 820. The communication apparatus 800 is configured to implement a function of the terminal device or the network device in the foregoing method embodiments.

When the communication apparatus 800 is configured to implement a function of the network device in the method embodiments shown in FIG. 5, the transceiver unit 810 is configured to receive first information from a terminal device, where the first information includes information about a first location and a movement speed of the terminal device, and the first location is a location of the terminal device. The processing unit 820 is configured to: predict, based on the first information, a second location at which the terminal device performs channel estimation, and determine a first channel covariance matrix, where the first channel covariance matrix is a channel covariance matrix of a downlink channel corresponding to the second location, and the first channel covariance matrix is for determining downlink channel state information. The processing unit 820 is further configured to send the first channel covariance matrix to the terminal device.

In a possible implementation, the processing unit 820 is configured to determine the first channel covariance matrix in the following manner: determining the first channel covariance matrix based on environment information of the second location.

In a possible implementation, the transceiver unit 810 is configured to send the first channel covariance matrix to the terminal device in the following manner: sending third information to the terminal device when a degree of variation of the first channel covariance matrix relative to the second channel covariance matrix satisfies a first condition, where the third information is for requesting the terminal device to report whether there is a channel covariance matrix update requirement; receiving the second information from the terminal device, where the second information indicates that there is a channel covariance matrix update requirement; and sending the first channel covariance matrix to the terminal device.

In a possible implementation, before receiving the second information from the terminal device, the transceiver unit 810 is further configured to send third information to the terminal device, where the third information is for requesting the terminal device to report whether there is a channel covariance matrix update requirement.

In a possible implementation, when the degree of variation of the first channel covariance matrix relative to the second channel covariance matrix satisfies the first condition, the transceiver unit 810 is further configured to: send third information to the terminal device, where the third information is for requesting the terminal device to report whether there is a channel covariance matrix update requirement; and send the first channel covariance matrix to the terminal device when receiving the second information.

In a possible implementation, the first channel covariance matrix includes a space domain covariance matrix, a frequency domain covariance matrix, and/or a joint space-frequency covariance matrix.

In a possible implementation, the first channel covariance matrix is the joint space-frequency covariance matrix.

The transceiver unit 810 is further configured to receive a first coefficient matrix from the terminal device, where the first coefficient matrix represents a projection coefficient of a downlink instantaneous channel on the joint space-frequency covariance matrix. The processing unit 820 is further configured to reconstruct, based on the first coefficient matrix, a first matrix, and a second matrix, the downlink channel corresponding to the second location, where the first matrix is a matrix formed by an eigenvector of a space domain covariance matrix included in the joint space-frequency covariance matrix, the second matrix is a matrix formed by an eigenvector of a frequency domain covariance matrix included in the joint space-frequency covariance matrix, and the first matrix and the second matrix are determined based on the first channel covariance matrix.

In a possible implementation, the processing unit 820 is configured to send the first channel covariance matrix to the terminal device in the following manner: sending the first channel covariance matrix which is compressed to the terminal device, where a data amount of the first channel covariance matrix is greater than a first threshold.

When the communication apparatus 800 is configured to implement a function of the terminal device in the method embodiments shown in FIG. 5, the transceiver unit 810 is configured to: send first information to a network device, where the first information includes location information of a first location and a movement speed of the terminal device, the first location is a location of the terminal device, and the first information is for predicting a second location at which the terminal device performs channel estimation, and receive a first channel covariance matrix from the network device, where the first channel covariance matrix is a channel covariance matrix of a downlink channel corresponding to the second location. The processing unit 820 is configured to determine, based on the first channel covariance matrix, downlink channel state information corresponding to the second location.

In a possible implementation, the transceiver unit 810 is configured to send the first information to the network device in the following manner: periodically sending the first information to the network device; or sending the first information to the network device when it is determined that the movement speed is greater than a preset speed.

In a possible implementation, the transceiver unit 810 is further configured to send second information to the network device, where the second information indicates that there is a channel covariance matrix update requirement.

In a possible implementation, before sending the second information to the network device, the transceiver unit 810 is further configured to receive third information from the network device, where the third information is for requesting the terminal device to report whether there is a channel covariance matrix update requirement.

In a possible implementation, the first channel covariance matrix includes a space domain covariance matrix, a frequency domain covariance matrix, and/or a joint space-frequency covariance matrix.

In a possible implementation, the first channel covariance matrix is the joint space-frequency covariance matrix. The processing unit 820 is further configured to determine a first coefficient matrix based on the joint space-frequency covariance matrix, where the first coefficient matrix represents a projection coefficient of a downlink instantaneous channel on the joint space-frequency covariance matrix. The transceiver unit 810 is further configured to send the first coefficient matrix to the network device, where the first coefficient matrix is for reconstructing the downlink channel corresponding to the second location.

In a possible implementation, the transceiver unit 810 is configured to receive the first channel covariance matrix which is compressed from the network device, and the processing unit 820 is further configured to decompress the first channel covariance matrix which is compressed, to obtain the first channel covariance matrix.

For more detailed descriptions of the transceiver unit 810 and the processing unit 820, refer to related descriptions in the method embodiments shown in FIG. 5.

A communication apparatus 900 shown in FIG. 9 includes a processor 910 and an interface circuit 920. The processor 910 and the interface circuit 920 are coupled to each other. Optionally, the interface circuit 920 may be a transceiver or an input/output interface. Optionally, the communication apparatus 900 may further include a memory 930, configured to: store instructions executed by the processor 910, or store input data required by the processor 910 to run instructions, or store data generated after the processor 910 runs instructions.

When the communication apparatus 900 is configured to implement the method shown in FIG. 5, the processor 910 is configured to implement a function of the processing unit 820, and the interface circuit 920 is configured to implement a function of the transceiver unit 810.

When the communication apparatus is a chip used in a terminal device, the chip in the terminal device may implement a function of the terminal device in the foregoing method embodiments. The chip in the terminal device receives information from another module (for example, a radio frequency module or an antenna) in the terminal device, where the information is sent by, for example, a network device to the terminal device. Alternatively, the chip in the terminal device may send information to another module (for example, a radio frequency module or an antenna) in the terminal device, where the information is sent by, for example, the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by, for example, a terminal device to the network device. Alternatively, the module in the network device sends information to another module (for example, a radio frequency module or an antenna) in the network device, where the information is sent by, for example, the network device to a terminal device. The module in the network device herein may be a baseband chip in the network device, may be a CU, a DU, or another module, or may be an apparatus in an open radio access network (open radio access network, O-RAN) architecture, for example, an apparatus such as an open CU or an open DU.

Optionally, in embodiments of this application, the processor 910 may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The steps of the methods in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be in a network device or a terminal device. Alternatively, the processor and the storage medium may exist in a network device or a terminal device as discrete components.

All or some of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs or instructions. When the computer program or instructions are loaded and executed on a computer, procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

Based on the foregoing embodiments, an embodiment of this application further provides a computer program product. The computer program product includes a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

Optionally, the computer may include but is not limited to the network device, the terminal device, or the like in the communication system shown in FIG. 1.

The storage medium may be any usable medium that can be accessed by the computer. The following provides an example but does not impose a limitation: The computer-readable medium may include a RAM, a ROM, an EEPROM, a CD-ROM, another optical disc storage, a disk storage medium, or another magnetic storage device, or any other medium that can be used to carry or store expected program code in a form of an instruction or a data structure and that can be accessed by the computer.

Based on the foregoing embodiments, an embodiment of this application further provides a chip. The chip is configured to read a computer program stored in a memory, to implement the method provided in the foregoing embodiments. Optionally, the chip may include a processor and a memory. The processor is coupled to the memory, and configured to read the computer program stored in the memory, so as to implement the method provided in the foregoing embodiments.

A person skilled in the art should understand that embodiments of this application may be provided as a method, a system, or a computer program product. Therefore, in this application, a form of hardware-only embodiments, software-only embodiments, or embodiments with a combination of software and hardware may be used. In addition, in this application, a form of a computer program product that is implemented on one or more computer-usable storage media (including but not limited to a disk memory, a CD-ROM, an optical memory, and the like) that include computer-usable program code may be used.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1.  A communication method, applied to a network device, wherein the method comprises:

    receiving first information from a terminal device, wherein the first information comprises information about a first location and a movement speed of the terminal device, and the first location is a location of the terminal device;
    predicting, based on the first information, a second location at which the terminal device performs channel estimation, and determining a first channel covariance matrix, wherein the first channel covariance matrix is a channel covariance matrix of a downlink channel corresponding to the second location, and the first channel covariance matrix is for determining downlink channel state information; and
    sending the first channel covariance matrix to the terminal device.

2.  The method according to claim 1, wherein determining the first channel covariance matrix comprises:
    determining the first channel covariance matrix based on environment information of the second location.

3.  The method according to claim 1 or 2, wherein sending the first channel covariance matrix to the terminal device comprises:

    sending the first channel covariance matrix to the terminal device when a degree of variation of the first channel covariance matrix relative to a second channel covariance matrix satisfies a first condition, wherein the second channel covariance matrix is a channel covariance matrix obtained in a previous channel estimation periodicity; or
    receiving second information from the terminal device, and sending the first channel covariance matrix to the terminal device, wherein the second information indicates that there is a channel covariance matrix update requirement.

4.  The method according to claim 3, wherein sending the first channel covariance matrix to the terminal device when the degree of variation of the first channel covariance matrix relative to the second channel covariance matrix satisfies the first condition comprises:

    sending third information to the terminal device when the degree of variation of the first channel covariance matrix relative to the second channel covariance matrix satisfies the first condition, wherein the third information is for requesting the terminal device to report whether there is a channel covariance matrix update requirement;

receiving the second information from the terminal device, wherein the second information indicates that there is a channel covariance matrix update requirement; and

sending the first channel covariance matrix to the terminal device.

5. The method according to claim 3, wherein before receiving the second information from the terminal device, the method further comprises:

sending third information to the terminal device, wherein the third information is for requesting the terminal device to report whether there is a channel covariance matrix update requirement.

6. The method according to any one of claims 1 to 5, wherein the first channel covariance matrix comprises a space domain covariance matrix, a frequency domain covariance matrix, and/or a joint space-frequency covariance matrix.

7. The method according to claim 6, wherein the first channel covariance matrix comprises the joint space-frequency covariance matrix, and the method further comprises:

receiving a first coefficient matrix from the terminal device, wherein the first coefficient matrix represents a projection coefficient of a downlink instantaneous channel on the joint space-frequency covariance matrix; and reconstructing, based on the first coefficient matrix, a first matrix, and a second matrix, the downlink channel corresponding to the second location, wherein the first matrix is a matrix formed by an eigenvector of a space domain covariance matrix comprised in the joint space-frequency covariance matrix, the second matrix is a matrix formed by an eigenvector of a frequency domain covariance matrix comprised in the joint space-frequency covariance matrix, and the first matrix and the second matrix are determined based on the first channel covariance matrix.

8. The method according to any one of claims 1 to 7, wherein sending the first channel covariance matrix to the terminal device comprises:

sending the first channel covariance matrix which is compressed to the terminal device, wherein a data amount of the first channel covariance matrix is greater than a first threshold.

9. A communication method, applied to a terminal device, wherein the method comprises:

sending first information to a network device, wherein the first information comprises information about a first location and a movement speed of the terminal device, the first location is a location of the terminal device, and the first information is for predicting a second location at which the terminal device performs channel estimation; receiving a first channel covariance matrix from the network device, wherein the first channel covariance matrix is a channel covariance matrix of a downlink channel corresponding to the second location; and determining, based on the first channel covariance matrix, downlink channel state information corresponding to the second location.

10. The method according to claim 9, wherein sending the first information to the network device comprises:

periodically sending the first information to the network device; or sending the first information to the network device when the movement speed of the terminal device is greater than a second threshold.

11. The method according to claim 9 or 10, wherein the method further comprises:

sending second information to the network device, wherein the second information indicates that there is a channel covariance matrix update requirement.

12. The method according to claim 11, wherein before sending the second information to the network device, the method further comprises:

receiving third information from the network device, wherein the third information is for requesting the terminal device to report whether there is a channel covariance matrix update requirement.

13. The method according to any one of claims 9 to 12, wherein the first channel covariance matrix comprises a space domain covariance matrix, a frequency domain covariance matrix, and/or a joint space-frequency covariance matrix.

14. The method according to claim 13, wherein the first channel covariance matrix comprises the joint space-frequency covariance matrix, and the method further comprises:

determining a first coefficient matrix based on the joint space-frequency covariance matrix, wherein the first coefficient matrix represents a projection coefficient of a downlink instantaneous channel on the joint space-frequency covariance matrix; and

sending the first coefficient matrix to the network device, wherein the first coefficient matrix is for reconstructing the downlink channel corresponding to the second location.

15. The method according to any one of claims 9 to 14, wherein receiving the first channel covariance matrix from the network device comprises:

receiving the first channel covariance matrix which is compressed from the network device; and
decompressing the first channel covariance matrix which is compressed, to obtain the first channel covariance matrix.

16. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 8 or the method according to any one of claims 9 to 15 by using a logic circuit or by executing code instructions.

17. A communication apparatus, comprising a module configured to perform the method according to any one of claims 1 to 8 or a module configured to perform the method according to any one of claims 9 to 15.

18. A computer-readable storage medium, wherein the storage medium stores a computer program or instructions, and when the computer program or the instructions are executed by a communication apparatus, the method according to any one of claims 1 to 8 is implemented, or the method according to any one of claims 9 to 15 is implemented.

19. A computer program product, wherein the computer program product comprises a computer program, and when the computer program is run on a computer, the computer is enabled to perform the method according to any one of claims 1 to 8, or the computer is enabled to perform the method according to any one of claims 9 to 15.

20. A chip system, wherein the chip system comprises:
a processor and an interface, wherein the processor is configured to invoke instructions from the interface and run the instructions, and when the processor executes the instructions, the method according to any one of claims 1 to 8 is implemented, or the method according to any one of claims 9 to 15 is implemented.

21. A communication system, comprising a terminal device and a network device, wherein
the network device is configured to perform the method according to any one of claims 1 to 8, and the terminal device is configured to perform the method according to any one of claims 9 to 15.

FIG. 1

FIG. 2

Network device

Terminal device

S301: Configuration information

S302: Reference signal

S303: Perform channel estimation based on the reference signal, to obtain CSI

FIG. 3

Network device

Terminal device

Location B

Terminal device

Location A

FIG. 4

FIG. 5

FIG. 6

FIG. 7

Communication apparatus 800

810

Transceiver unit

820

Processing unit

FIG. 8

Communication apparatus 900

Processor 910

Interface circuit 920

Memory 930

FIG. 9

## INTERNATIONAL SEARCH REPORT

| | International application No. |
|---|---|
| | **PCT/CN2024/088699** |

| A. | CLASSIFICATION OF SUBJECT MATTER |
|---|---|
| | H04B 7/06(2006.01)i |

According to International Patent Classification (IPC) or to both national classification and IPC

| B. | FIELDS SEARCHED |
|---|---|

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT: ENTXT; ENTXTC; VEN; DWPI; CNKI; 3GPP: 位置, 速度, 预测, 预估, 估计, 协方差, 矩阵, 信道, 轨迹, 定位, position, velocity, predict, estimate, covariance, matrix, channel, trajectory

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | EP 3016434 A1 (ALCATEL LUCENT) 04 May 2016 (2016-05-04) description, paragraphs [0024]-[0084] | 1-21 |
| Y | CN 110892688 A (FRAUNHOFER-GESELLSCHAFT ZUR FÖRDERUNG DER ANGEWANDTEN FORSCHUNG E.V.) 17 March 2020 (2020-03-17) description, paragraphs [0040]-[0153], and figures 2-5 | 1-21 |
| Y | CN 101277278 A (TSINGHUA UNIVERSITY) 01 October 2008 (2008-10-01) description, page 1, paragraph 2 to page 6, paragraph 4 | 1-21 |
| A | CN 111404847 A (SUN YAT-SEN UNIVERSITY) 10 July 2020 (2020-07-10) entire document | 1-21 |
| A | US 2021126692 A1 (LG ELECTRONICS INC.) 29 April 2021 (2021-04-29) entire document | 1-21 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 July 2024** | **22 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088699**

| Patent document cited in search report | | | Publication date (day/month/year) | Patent family member(s) | | | Publication date (day/month/year) |
|---|---|---|---|---|---|---|---|
| EP | 3016434 | A1 | 04 May 2016 | None | | | |
| CN | 110892688 | A | 17 March 2020 | WO | 2019011454 | A1 | 17 January 2019 |
| | | | | EP | 3652906 | A1 | 20 May 2020 |
| | | | | US | 2020127713 | A1 | 23 April 2020 |
| CN | 101277278 | A | 01 October 2008 | None | | | |
| CN | 111404847 | A | 10 July 2020 | None | | | |
| US | 2021126692 | A1 | 29 April 2021 | WO | 2019143226 | A1 | 25 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310481480